Europäisches Patentamt

European Patent Office

Office européen des brevets

(11) Veröffentlichungsnummer: **0 138 072**
**B1**

(12) # EUROPÄISCHE PATENTSCHRIFT

(45) Veröffentlichungstag der Patentschrift:
13.01.88

(21) Anmeldenummer: 84110966.3

(22) Anmeldetag: 13.09.84

(51) Int. Cl.⁴: **B 23 K 1/12 //**
**H01R43/02**

(54) Löteinrichtung zum Stumpflöten von Teilen, insbesondere zum Stumpfhartlöten von Drähten.

(30) Priorität: 29.09.83 DE 3335432

(43) Veröffentlichungstag der Anmeldung:
24.04.85 Patentblatt 85/17

(45) Bekanntmachung des Hinweises auf die Patenterteilung:
13.01.88 Patentblatt 88/2

(84) Benannte Vertragsstaaten:
AT BE CH DE FR GB IT LI NL SE

(56) Entgegenhaltungen:
CH-A-510 338
US-A-3 857 013

(73) Patentinhaber: Siemens Aktiengesellschaft Berlin
und München, Wittelsbacherplatz 2, D-8000
München 2 (DE)

(72) Erfinder: Lindner, Kurt, Senftenauerstrasse 146,
D-8000 München 21 (DE)

## Beschreibung

Die Erfindung betrifft eine Löteinrichtung zum Stumpflöten von Teilen, insbesondere zum Stumpfhartlöten von Drähten, bei welcher die Teile in zwei relativ zueinander bewegbaren Klemmeinrichtungen spannbar und mit einem zwischen die Lötflächen eingebrachten Lot unter gegenseitigem Andruck bei gleichzeitiger Widerstandserwärmung auf Arbeitstemperatur miteinander verlötbar sind, mit
- einer quer zur Andruckrichtung bewegbaren Lotführung, durch welche das Lot zwischen die Lötflächen führbar ist und
- einer Auslöteinrichtung, durch welche die Lotführung während des Lötvorganges seitlich auslenkbar ist.

Derartige Löteinrichtungen werden beispielsweise zum endlosen Verlängern von Drähten bei Kabeln und Bauteilen eingesetzt.

Aus der Patentschrift US-A-3 857 013 ist eine gattungsgemäße Lötvorrichtung bekannt bei der das Lot in Form einer Lotscheibe eingebracht wird, die vom Operator nach jedem Lötvorgang manuell über einen Knopf weitergedreht werden muß. Eine hohe Qualität mehrerer aufeinanderfolgender Lötvorgänge ist hierbei dadurch gewährleistet, daß jeweils eine konstante Lotmenge eingebracht wird. Andererseits ist die bestehende Löteinrichtung äußerst kompliziert aufgebaut und auch schwierig zu handhaben.

Der Erfindung liegt die Aufgabe zugrunde, eine Löteinrichtung zum Stumpflöten von Teilen zu schaffen, die einfach aufgebaut und leicht zu handhaben ist.

Die erfindungsgemäße Lösung dieser Aufgabe ist gekennzeichnet durch eine Auslöteinrichtung die durch eine Blattfeder gebildet ist, die im Bereich einer Aussparung der Lotführung unmittelbar an einem darin geführten Lotband derart angreift, daß sie durch die Rückstellbewegung der Lotführung aus der seitlich ausgelenkten Position spannbar ist, und einen Vorschub des Lotbandes bewirkt.

Die bei der Erfindung eingesetzte Blattfeder, die als Auslöteinrichtung fungiert sorgt in einfacher Weise dafür daß während des Lötvorganges ein reproduzierbarer seitlicher Druck auf die Lotführung ausgeübt wird und das Lotband jeweils einen definierten Vorschub erhält. Diese Auslötfeder kann im Bereich einer Aussparung der Lotführung unmittelbar am Lotband derart angreifen, daß durch die Rückstellbewegung der Lotführung aus der seitlich ausgelenkten Position der Vorschub des Lotbandes bewirkt wird. Eine derartige Auslötfeder dient also nicht nur als Auslöteinrichtung sondern gleichzeitig auch als automatische Vorschubeinrichtung für das Lotband.

Die für den Auslötvorgang erforderliche bewegliche Anordnung der Lotführung kann auf besonders einfache Weise dadurch realisiert werden, daß die Lotführung um eine fest angeordnete Achse schwenkbar ist. Dabei ist der Schwenkbereich der Lotführung zweckmäßigerweise durch zwei Anschläge begrenzt.

Eine weitere Vereinfachung in der Handhabung der erfindungsgemäßen Löteinrichtung wird dadurch erreicht, daß die Lotführung durch eine Rückstelleinrichtung aus der seitlich ausgelenkten Position rückstellbar ist. Die Rückstellung ist dabei besonders einfach zu realisieren, wenn die Rückstelleinrichtung durch eine die Form einer Blattfeder aufweisende und während des Lötvorganges von der Lotführung abrückbare Rückstellfeder gebildet ist.

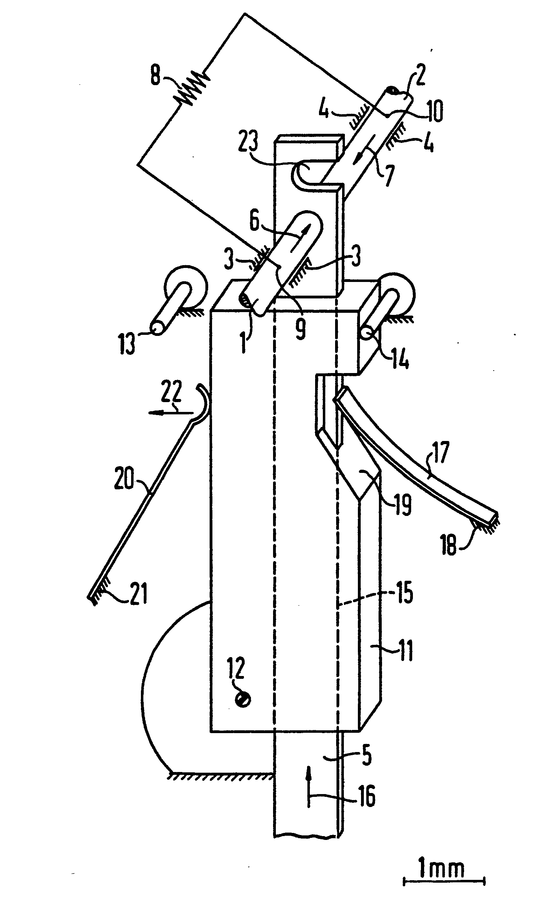

Ein Ausführungsbeispiel der Erfindung ist in der Zeichnung dargestellt und wird im folgenden näher beschrieben.

Die Zeichnung zeigt in stark vereinfachter schematischer Darstellung eine Löteinrichtung zum Stumpfhartlöten von Drähten. Die beiden miteinander zu verbindenden Drähte 1 und 2 werden in lediglich schematisch angedeuteten Klemmeinrichtungen 3 und 4 geführt und so eingespannt, daß die zu verbindenden Enden herausragen. Die beiden Klemmeinrichtungen 3 und 4 sind relativ zueinander beweglich angeordnet, so daß die Drähte 1 und 2 zusammengefahren und mit einem zwischen die Lötflächen eingeführten Lotband 5 unter gegenseitigem Andruck gehalten werden können. Dieser gegenseitige Andruck ist in der Zeichnung durch Pfeile 6 und 7 angedeutet. Für die Widerstandserwärmung der Drähte 1 und 2 auf Arbeitstemperatur ist in dem dargestellten Ausführungsbeispiel ein Transformator 8 vorgesehen, wobei die Kontaktierung mit den Drähten 1 und 2 nur durch Punkte 9 und 10 angedeutet ist.

Unterhalb der beiden Klemmeinrichtungen 3 und 4 ist eine quaderförmig ausgebildete Lötführung 11 angeordnet, welche um eine im unteren Bereich angeordnete, feststehende Achse 12 geschwenkt werden kann. Der Schwenkbereich der Lotführung 11 ist dabei durch zwei in dem oberen Bereich angeordnete, feststehende Anschläge 13 und 14 begrenzt. Innerhalb der Lotführung 11 befindet sich ein in Längsrichtung verlaufender Führungskanal 15, durch welchen das einen rechteckförmigen Querschnitt aufweisende Lotband 5 in Richtung des Pfeiles 16 genau zwischen die Lötflächen der Drähte 1 und 2 geführt werden kann.

Auf einer Seite der Lotführung 11 ist eine als Blattfeder ausgebildete Auslötfeder 17 angeordnet, deren eines Ende, wie bei 18 angedeutet, fest eingespannt ist, während das aufwärts gebogene freie Ende im Bereich einer Aussparung 19 der Lotführung 11 unmittelbar an einer Schmalseite des Lotbandes 5 anliegt. Auf der der Auslötfeder 17 gegenüberliegenden Seite der Lotführung 11 ist eine ebenfalls als Blattfeder ausgebildete Rückstellfeder 20 angeordnet, deren eines Ende, wie bei 21 angedeutet, fest eingespannt ist, während das kreisbogenförmig gekrümmte freie Ende in der dargestellten Position gegen die Lotführung 11 drückt.

Zur weiteren Erläuterung der Funktionsweise der erfindungsgemäßen Löteinrichtung soll von der in der Zeichnung dargestellten Positon ausgegangen werden. In dieser Position drückt die Rückstellfeder 20 die Lotführung 11 gegen die Kraft der Auslötfeder 17 an den Anschlag 14. Die beiden Drähte 1 und 2 stehen entsprechend den Pfeilen 6 und 7 unter gegenseitigem Andruck und halten dadurch das zwischen die Lötflächen eingeführte Lotband 5. Die Rückstellfeder 20 wird nun in Richtung des Pfeiles 22 von der Lotführung 11 abgehoben, so daß das Lotband 5 und die Lotführung 11 nur noch durch die gespannte Auslötfeder 17 unter einem gleichbleibenden seitlichen Druck stehen. Wird nunmehr die Widerstandserwärmung über den Transformator 8 eingeschaltet, so schmilzt das Lot zwischen den Drähten 1 und 2 aus und die Lotführung 11 wird durch den Druck der Auslötfeder 17 seitlich ausgelenkt, bis sie an dem Anschlag 13 anliegt. Während dieses Lötvorganges entsteht in dem Lotband 5 durch das seitliche Auslenken eine U-förmige Aussparung 23, die in der Zeichnung für den vorangegangenen Lötvorgang dargestellt ist.

Nach der Entnahme der nunmehr miteinander verbundenen Drähte 1 und 2 wird die Lotführung 11 durch die Rückstellfeder 20 gegen den Anschlag 14 zurückgedrückt. Bei dieser Rückstellbewegung der Lotführung 11 sperrt das freie Ende der Auslötfeder 17 das Lotband 5 und schiebt es dadurch in Richtung des Pfeiles 16 um eine Teilung weiter. Danach werden die nächsten zu verbindenden Drähte eingelegt und der vorstehend beschriebene Ablauf wiederholt sich.

Mit der dargestellten Löteinrichtung wird durch den gleichbleibenden Lotauftrag und die gleichbleibenden Lötbedingungen eine hohe und reproduzierbare Qualität der Verbindungen erreicht. Die zur Verbindung von Drähten bei Nachrichtenkabeln entwickelte Löteinrichtung wurde in der Zeichnung stark vergrößert dargestellt. Um einen Eindruck über die tatsächliche Größe der Löteinrichtung zu vermitteln, ist in der Zeichnung zum Vergleich die Strecke von 1 mm aufgetragen.

Anstelle der beschriebenen Auslötfeder 17 kann auch ein exentrisch gelagertes Sperrad im Bereich der Aussparung 19 angeordnet werden. Dieses Sperrad liegt dann mit einer Verzahnung, Rändelung oder dergleichen derart reibschlüssig an dem Lotband 5 an, daß mit der Rückstellung der Lotführung 11 eine nach Art einer Uhrfeder ausgebildete Feder gespannt und gleichzeitig das Lotband 5 in Richtung des Pfeiles 16 um eine Teilung weitergeschoben wird. Nach dem Abheben der Rückstellfeder 20 übt die gespannte Feder dann über das Sperrad und das Lotband 5 einen gleichbleibenden seitlichen Druck auf die Lotführung 11 aus. Das exentrisch gelagerte und gegen die Kraft einer Feder spannbare Sperrad wirkt somit ebenfalls gleichzeitig als Auslöteinrichtung und Vorschubeinrichtung für das Lotband 5.

**Patentansprüche**

1. Löteinrichtung zum Stumpflöten von Teilen, insbesondere zum Stumpfhartlöten von Drähten (1, 2), bei welcher die Teile in zwei relativ zueinander bewegbaren Klemmeinrichtungen (3, 4) spannbar und mit einem zwischen die Lötflächen eingebrachten Lot unter gegenseitigem Andruck bei gleichzeitiger Widerstandserwärmung auf Arbeitstemperatur miteinander verlötbar sind, mit
- einer quer zur Andruckrichtung (6, 7) bewegbaren Lotführung (11), durch welche das Lot zwischen die Lötflächen führbar ist und
- einer Auslöteinrichtung, durch welche die Lotführung (11) während des Lötvorganges seitlich auslenkbar ist, dadurch gekennzeichnet, daß die Auslöteinrichtung durch eine Blattfeder (17) gebildet ist, die im Bereich einer Aussparung (19) der Lotführung (11) unmittelbar an einem darin geführten Lotband (5) derart angreift, daß sie durch die Rückstellbewegung der Lotführung (11) aus der seitlich ausgelenkten Position spannbar ist, und dabei einen Vorschub des Lotbandes (5) bewirkt.

2. Löteinrichtung nach Anspruch 1, dadurch gekennzeichnet, daß die Lotführung (11) um eine fest angeordnete Achse (12) schwenkbar ist.

3. Löteinrichtung nach Anspruch 2, dadurch gekennzeichnet, daß der Schwenkbereich der Lotführung (11) durch zwei Anschläge (13, 14) begrenzt ist.

4. Löteinrichtung nach einem der vorhergehenden Ansprüche, dadurch gekennzeichnet, daß die Lotführung (11) durch eine Rückstelleinrichtung aus der seitlich ausgelenkten Position rückstellbar ist.

5. Löteinrichtung nach Anspruch 4, dadurch gekennzeichnet, daß die Rückstelleinrichtung durch eine die Form einer Blattfeder aufweisende und während des Lötvorganges von der Lotführung (11) abrückbare Rückstellfeder (20) gebildet ist.

**Claims**

1. A soldering device for the butt soldering of components, in particular for the butt hard-soldering of wires (1, 2), wherein the components can be clamped in two clamping devices (3, 4), which can be moved relative to one another and can be soldered to one another by means of solder introduced between surfaces to be soldered, by being pressed against one another and simultaneously resistance-heated to operating temperature, comprising
- a solder guide (11) which can be moved transversely to the direction of pressure (6, 7) and by means of which the solder can be conveyed between the soldering surfaces, and
- a solder-release device by means of which the solder guide (11) can be laterally deflected during the soldering process, characterised in that the solder-release device is formed by a leaf spring (17) which, in the region of an opening (19) in the solder guide (11) acts directly on a solder strip (5) which is guided therein, in such manner that as a result of the return movement of the solder guide (11) from the laterally deflected position it can be put under tension and thereby advance the solder strip (5).

2. A soldering device as claimed in Claim 1, <u>characterised in</u> that the solder guide (11) can be pivoted about a fixed axis (12).

3. A soldering device as claimed in Claim 2, <u>characterised in</u> that the pivoting range of the solder guide (11) is delimited by two stops (13, 14).

4. A soldering device as claimed in one of the preceding Claims, <u>characterised in</u> that the solder guide (11) can be reset from the laterally deflected position by a resetting device.

5. A soldering device as claimed in Claim 4, <u>characterised in</u> that the resetting device is formed by a return spring (20) which is in the form of a leaf spring and which can be moved away from the solder guide (11) during the soldering process.

## Revendications

1. Appareil de brasage pour braser des pièces bout à bout, notamment pour le brasage fort, bout à bout, de fils (1, 2), dans lequel les pièces sont serrées dans deux dispositifs de serrage (3, 4) déplaçables l'un par rapport à l'autre et sont brasées l'une à l'autre par de la brasure introduite entre les faces à braser, pendant que les pièces sont pressées l'une vers l'autre et sont en même temps chauffées par résistance à la température de travail, appareil qui comprend
- un guide-brasure (11) par lequel la brasure est introduite entre les faces à braser et qui est déplaçable perpendiculairement à la direction de pression (6, 7) et
- un dispositif de dégagement par lequel le guide-brasure (11) est écarté latéralement par basculement pendant l'opération de brasage,
. caractérisé en ce que le dispositif de dégagement est formé par un ressort plat (17) qui agit directement sur un ruban de brasure (5) dans un évidement (19) du guide-brasure (11), dans lequel est guidé ce ruban, de manière que ce ressort soit armé par le mouvement de rappel du guide-brasure (11) depuis sa position d'écartement latéral, en produisant une avance du ruban de brasure (5).

2. Appareil selon la revendication 1, caractérisé en ce que le guide-brasure (11) est monté basculant sur un axe fixe (12).

3. Appareil selon la revendication 2, caractérisé en ce que la zone de basculement du guide-brasure (11) est limitée par deux butées (13, 14).

4. Appareil selon une des revendications précédentes, caractérisé en ce que le guide-brasure (11) est rappelé depuis sa position d'écartement latéral par un dispositif de rappel.

5. Appareil selon la revendication 4, caractérisé en ce que le dispositif de rappel est constitué par un ressort de rappel (20) ayant la forme d'un ressort plat et qui peut être écarté du guide-brasure (11) pendant l'opération de brasage.

1mm